(19) Europäisches Patentamt
European Patent Office
Office européen des brevets

(11) **EP 2 789 882 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(51) Int Cl.:
*F16H 61/462* (2010.01)    *F16H 61/04* (2006.01)
*F16H 47/04* (2006.01)    *F16H 61/421* (2010.01)
*F16H 61/431* (2010.01)

(21) Anmeldenummer: **13163445.3**

(22) Anmeldetag: **12.04.2013**

(54) **Leistungsverzeigtes Getriebe für einen Fahrantrieb und Verfahren zur Steuerung des Getriebes**

Power-splitting transmission for a vehicle propulsion system and method for controlling the transmission

Engrenage à puissance dérivée pour un entraînement de roulement et procédé de commande de l'engrenage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.10.2014 Patentblatt 2014/42**

(73) Patentinhaber: **Dana Rexroth Transmission Systems S.r.l.**
**38062 Arco (Trento) (IT)**

(72) Erfinder:
• **Moeller, Dennis**
**38066 Riva del Garda (IT)**

• **Salaris, Marianna**
**38069 Nago-Torbole (IT)**

(74) Vertreter: **Maiß, Harald**
**Bosch Rexroth AG**
**Patentabteilung**
**Ernst-Sachs-Straße 100**
**97424 Schweinfurt (DE)**

(56) Entgegenhaltungen:
DE-A1- 4 104 167        DE-A1- 10 144 943
DE-A1- 10 149 883        DE-A1-102006 017 792
US-A1- 2006 172 854

## Beschreibung

Die Erfindung betrifft ein leistungsverzeigtes Getriebe für einen Fahrantrieb gemäß dem Oberbegriff des Patentanspruchs 1, sowie ein Verfahren zur Steuerung des Getriebes gemäß dem Oberbegriff des Patentanspruchs 6. Gattungsgemäße leistungsverzweigte Getriebe für einen Fahrantrieb, insbesondere den einer mobilen Arbeitsmaschine, beispielsweise eines Radladers, weisen neben einem mechanischen Leistungszweig, der mit einer festen oder mit einer variablen Übersetzung betreibbar ist, einen weiteren Leistungszweig auf. Letztgenannter ist als hydraulischer Getriebezweig mit einer Hydropumpe und einem Hydromotor als geschlossener hydraulischer Kreis ausgebildet. Dabei weist wenigstens die Hydropumpe ein verstellbares Verdrängungsvolumen auf, so dass über den hydraulischen Getriebezweig das gesamte Übersetzungsverhältnis des leistungsverzweigten Getriebes stufenlos variierbar ist. Der Hydromotor kann mit verstellbarem oder mit konstantem Verdrängungsvolumen ausgebildet sein.

Über einen häufig als Planetengetriebe ausgebildeten Summierabschnitt des Getriebes können Leistungen der beiden Leistungszweige zusammengeführt und auf einen Getriebeausgang, beispielsweise eine Abtriebswelle des Getriebes, übertragen werden. Weiterhin sind die Leistungszweige über einen Getriebeeingang, insbesondere eine Getriebeeingangswelle, mit einer Antriebsmaschine des Fahrantriebs, beispielsweise einer Verbrennungskraftmaschine, vorzugsweise einem Dieselmotor, koppelbar oder gekoppelt.

Eine Verstellung des Verdrängungsvolumens der Hydrostaten erfolgt dabei an einem aktuell angeforderten Bedarf orientiert über eine vorzugsweise elektrohydraulische Verstelleinrichtung. Diese ist zu diesem Zweck über ein beispielsweise elektromagnetisch betätigbares Proportional-Wegeventil mit Steuerdruckmittel beaufschlagbar. Das Ventil wird hierfür von einer Steuereinrichtung des Getriebes oder des Fahrantriebs mit einem vom aktuell angeforderten Bedarf abhängigen Verdrängungsvolumensollwert angesteuert. Die Anforderung einer Fahrgeschwindigkeit erfolgt beispielsweise über ein Fahrpedal, das von einem Bediener betätigt wird, und das seinerseits mit der Steuereinrichtung verbunden ist. Diese ermittelt für die Hydropumpe und gegebenenfalls für den Hydromotor auf Basis der Anforderung und kinematischer Gleichungen des Getriebes, der inversen Kinematik, einen Sollwert für das Verdrängungsvolumen jeder verstellbaren Hydromaschine. Eine Rückmeldung der aktuellen Fahrgeschwindigkeit an die Steuereinrichtung erfolgt über einen Drehzahlsensor.

Gattungsgemäße leistungsverzweigte Getriebe zeigen beispielsweise die Offenlegungsschriften DE 10 2007 037 107 A1, DE 10 2007 037 664 A1 und DE 101 49 883 A1. Diese haben mehrere Fahrbereiche. Ein rein hydraulischer Fahrbereich liegt dann vor, wenn an einer Leistungsübertragung zwischen der Eingangswelle und der Abtriebswelle des Getriebes nur der hydraulische Leistungszweig unter Umgehung des mechanischen Leistungszweigs beteiligt ist. Umgekehrt ist ein rein mechanischer Fahrbereich gegeben, wenn nur der mechanische Leistungszweig beteiligt ist. Sind beide Leistungszweige an der Leistungsübertragung beteiligt, gilt der Fahrbereich als leistungsverzweigt. Ein leistungsverzweigtes Getriebe ist beispielweise gemäß dem Oberbegriff des Anspruchs 1 aus DE 10 2006 017792 A1 bekannt. Bei einer Beschleunigung des Fahrzeugs werden nacheinander Fahrbereiche und, innerhalb der Fahrbereiche, Fahrbereichsabschnitte durchlaufen. Zum Anfahren wird bevorzugt ein erster, rein hydrostatischer Fahrbereich ausgewählt. Mit dem Ziel eines möglichst hohen Anfahrmomentes wird dabei während eines ersten Fahrbereichsabschnitts der verstellbare Hydromotor zunächst auf sein maximales Verdrängungsvolumen eingestellt, das konstant gehalten wird, während das Verdrängungsvolumen der Hydropumpe gemäß der angeforderten Geschwindigkeit über die vorbeschriebene Steuereinrichtung immer am aktuellen Bedarf orientiert, von einem Minimum, insbesondere von Null ausgehend erhöht wird. Erreicht das Verdrängungsvolumen der Hydropumpe ein Maximum, so erfolgt ein Wechsel vom ersten Fahrbereichsabschnitt in einen zweiten Fahrbereichsabschnitt des hydrostatischen Fahrbereichs. In diesem hält die Steuereinrichtung im Folgenden das Verdrängungsvolumen der Hydropumpe konstant, während über sie das Verdrängungsvolumen des Hydromotors entsprechend der angeforderten Geschwindigkeit über die vorbeschriebene Steuereinrichtung, am aktuellen Bedarf orientiert, verringert wird.

Bei Erreichen eines geeigneten Schaltkriteriums wird über eine Kupplung der mechanische Zweig mit dem Summierabschnitt verbunden, so dass ein leistungsverzweigter Fahrbereich ausgewählt ist und ein dritter Fahrbereichsabschnitt folgt. In diesem kann eine weitere Erhöhung der Geschwindigkeit beziehungsweise des Übersetzungsverhältnisses je nach Konzept des Summierabschnittes beispielweise durch eine Vergrößerung des Schluckvolumens und / oder eine Verringerung des Fördervolumens einer oder beider Hydromaschinen erreicht werden. Weitere Getriebestufen können zur Ausbildung weiterer Fahrbereiche mit den beiden Leistungszweigen gekoppelt werden.

Nachteilig an den bekannten Lösungen ist, dass bei Übergängen zwischen Fahrbereichen oder bei Übergängen zwischen Fahrbereichsabschnitten, bei denen für eine der Hydromaschinen ein Wechsel vom konstant gehalten hin zum variabel gesteuerten Verdrängungsvolumen erfolgt - oder umgekehrt -, oder bei Übergängen, bei denen ein Wechsel der Leistungsflussrichtung des Getriebes erfolgt eine verringerte Leistung und eine verschlechterte Fahrdynamik zur Verfügung steht. Dies ist vom Bediener beispielsweise in Form eines ruckartigen Fahrbetriebes oder einer Abweichung der aktuellen von der angeforderten Fahrgeschwindigkeit wahrnehmbar. Ursache hierfür sind beispielsweise endliche Antwortzeiten der angesteuerten Hydromaschine oder eine diskontinuierliche Getriebecharakteristik.

Dem gegenüber liegt der Erfindung die Aufgabe zu Grunde, ein leistungsverzweigtes Getriebe für einen Fahrantrieb mit verbesserter Fahrdynamik zu schaffen. Weiterhin liegt der Erfindung die Aufgabe zu Grunde, ein Verfahren zur Steuerung eines solchen Getriebes zu schaffen.

Die erste Aufgabe wird gelöst durch ein leistungsverzweigtes Getriebe mit den Merkmalen des Patentanspruchs 1. Die zweite Aufgabe wird gelöst durch ein Verfahren mit den Merkmalen des Patentanspruchs 6. Vorteilhafte Weiterbildungen der Erfindung sind in den abhängigen Patentansprüchen 2 bis 5 und 7 bis 9 beschrieben.

Ein leistungsverzweigtes Getriebe für einen Fahrantrieb, insbesondere den eines Radladers, hat eine insbesondere mit einer Antriebsmaschine des Fahrantriebs koppelbaren Getriebeeingang, der insbesondere eine Eingangswelle des Getriebes aufweist. Weiterhin hat es einen insbesondere mit einer Rad- oder Achseinheit des Fahrantriebs koppelbaren Getriebeausgang, der insbesondere eine Ausgangswelle des Getriebes aufweist. Über Drehzahlen des Ein- und Ausgangs ist dabei ein Übersetzungsverhältnis des Getriebes definierbar. Mit Istwerten der Drehzahlen ist dies insbesondere ein tatsächliches oder aktuelles Übersetzungsverhältnis des Getriebes. Weiterhin hat das Getriebe einen hydraulischen Leistungszweig mit einer mit dem Getriebeeingang insbesondere mechanisch koppelbaren ersten Hydromaschine und einer mit dieser über eine erste Arbeitsleitung und eine zweite Arbeitsleitung fluidisch verbindbaren, und mit dem Getriebeausgang koppelbaren, zweiten Hydromaschine. Die Arbeitsleitungen und Hydromaschinen bilden so insbesondere einen geschlossenen hydraulischen Kreislauf. Dabei weisen beide Hydromaschinen eine Verstelleinrichtung zur Verstellung ihres Verdrängungsvolumens auf. Zudem hat das Getriebe einen weiteren, insbesondere mechanischen Leistungszweig, der mit dem Getriebeeingang und dem Getriebeausgang insbesondere mechanisch koppelbar ist. Weiterhin hat das Getriebe eine Steuereinrichtung zur Steuerung des Übersetzungsverhältnisses. Diese ist derart ausgestaltet, dass über sie die jeweilige Verstelleinrichtung mit einem Verdrängungsvolumensollwert oder einem dazu proportionalen Sollwert ansteuerbar ist, der zumindest in einem Fahrbereich des Getriebes, in dem das Verdrängungsvolumen einer der Hydromaschinen ein absolutes oder ein lokales Maximum erreicht oder ausgehend vom Maximum verringert wird, gegenüber einem an einem aktuellen Bedarf orientierten Verdrängungsvolumensollwert verändert ist.

In einer möglichen Ausgestaltung des Getriebes ist der aktuelle Bedarf ein aktuell angefordertes Übersetzungsverhältnis des Getriebes oder eine aktuell angeforderte Fahrgeschwindigkeit des Fahrantriebs, das oder die an die Steuereinrichtung übermittelbar ist.

Der gegenüber dem am aktuellen Bedarf orientierten Verdrängungsvolumensollwert veränderte Verdrängungsvolumensollwert bringt den Vorteil mit sich, dass das Übersetzungsverhältnis und / oder die Fahrgeschwindigkeit dem Bedarf dynamischer und zudem kontinuierlicher nachführbar sind. Für einen Bediener des Getriebes oder Fahrantriebs macht sich das in einer verbesserten Fahrdynamik im Sinne einer präziseren Steuerung des Übersetzungsverhältnisses und eines komfortableren Fahrbetriebs mit dem Nebeneffekt einer konstanteren Leistungsaufnahme durch das Getriebe ohne Sprünge bemerkbar.

Das Getriebe weist vorzugsweise mehr als einen Fahrbereich auf. Der Fahrbereich erstreckt sich über ein fahrbereichspezifisches Intervall des Übersetzungsverhältnisses. Er kann unverzweigt sein, so dass nur einer der Leistungszweige zur vom Getriebe übertragenen Leistung beiträgt, oder er kann leistungsverzweigt sein, indem beide Leistungszweige dazu beitragen. Fahrbereiche, beziehungsweise deren Übersetzungsverhältnisintervalle, können sich überschneiden oder können voneinander getrennt sein. Ein rein hydraulischer Fahrbereich des Getriebes, in dem die Leistungsübertragung nur über den hydraulischen Leistungszweig erfolgt und der andere Leistungszweig entkoppelt ist, eignet sich beispielsweise besonders für eine Arbeitsfahrt des Fahrantriebs, in dem nur geringe Geschwindigkeiten benötigt werden, ein Antriebsmoment jedoch über weite Bereiche präzise verstellbar sein muss. Ein leistungsverzweigter oder ein rein mechanischer Fahrbereich eignet sich hingegen überwiegend für einen Fahrbetrieb mit eingeschränkter Dynamik bezüglich Fahrgeschwindigkeit und Zugkraft beziehungsweise mit nahezu konstantem Betriebspunkt.

Sind die Leistungszweige über Kupplungen des Getriebes diesem zuschaltbar, so entspricht jedem Fahrbereich ein definiertes Schaltbild der Kupplungen. Ein Wechsel des Fahrbereichs kann dann beispielsweise über die Betätigung oder das Lösen wenigstens einer der Kupplungen erfolgen.

Ein Fahrbereich weist nur einen oder er weist mehrere Fahrbereichsabschnitte auf, über die das Übersetzungsverhältnisintervall des Fahrbereichs in mehrere Abschnitte unterteilt ist. Weist er nur den einen Fahrbereichsabschnitt auf, so erstreckt sich der Fahrbereichsabschnitt über seinen kompletten Fahrbereich.

Ein Fahrbereichsabschnitt ist beispielsweise dadurch definiert, dass in ihm das tatsächliche Verdrängungsvolumen nur einer der Hydromaschinen variabel ist, wohingegen das andere konstant ist. Ein anderer Fahrbereichsabschnitt kann dadurch definiert werden, dass in ihm das tatsächliche Verdrängungsvolumen beider Hydromaschinen variabel ist.

Zur Ermittlung zumindest des veränderten Verdrängungsvolumensollwertes, und vorzugsweise ebenso zur Ermittlung des am Bedarf orientierten Verdrängungsvolumensollwertes, weist die Steuereinrichtung in einer möglichen Ausgestaltung eine Speichereinheit auf, in der ein Verfahren, wie es weiter unten beschrieben ist, speicherbar ist. Zur Ausführung des Verfahrens kann sie zudem eine Prozessoreinheit aufweisen.

Vorzugsweise ist die Steuereinrichtung derart ausgestaltet, dass sie zum Empfang des Bedarfs mit einem Sollwertgeber des Getriebes oder Fahrantriebes über eine Signalleitung, insbesondere über ein Bussystem, oder drahtlos, insbesondere über WLAN, signalverbindbar ist.

Findet das Getriebe in einem Fahrantrieb Verwendung, ist der Sollwertgeber vorzugsweise als Fahrpedal oder Joystick des Fahrtantriebs ausgebildet. Erfindungsgemäß weisen beide Hydromaschinen jeweils eine Verstelleinrichtung auf, die in genannter Weise über die Steuereinrichtung mit einem jeweiligen Verdrängungsvolumensollwert ansteuerbar ist, der zumindest in dem einen Fahrbereich des Getriebes gegenüber dem am aktuellen Bedarf orientierten Verdrängungsvolumensollwert verändert ist.

In diesem Fall ist die Erfüllung des Bedarfs über die Steuereinrichtung besonders flexibel steuerbar.

Alternativ dazu kann das Getriebe derart ausgestaltet sein, dass nur die erste Hydromaschine die Verstelleinrichtung aufweist und die zweite Hydromaschine mit konstantem Verdrängungsvolumen ausgebildet ist. Diese Variante ist vorrichtungstechnisch besonders einfach.

Bei einer besonders vorteilhaften Weiterbildung des Getriebes ist die Steuereinrichtung derart ausgestaltet ist, dass über sie der eine oder beide Verdrängungsvolumensollwerte zumindest in Abhängigkeit des Fahrbereichs des Getriebes und / oder des tatsächlichen Übersetzungsverhältnisses (r) und / oder einer Leistungsflussrichtung des Getriebes und / oder eines Arbeitsdrucks der Arbeitsleitungen und / oder eines Grenzarbeitsdrucks der Arbeitsleitungen und / oder einer Getriebeeingangsdrehzahl und / oder einer Druckmitteltemperatur verändert ist oder sind.

Diese Veränderung ist eine Korrektur des einen oder der beiden Verdrängungsvolumensollwerte in Abhängigkeit von Prozessparametern des Getriebes, die es ermöglicht, eine Restabweichung des Übersetzungsverhältnisses vom angeforderten Übersetzungsverhältnis zu minimieren. Für den Bediener ergeben sich auch hierdurch wieder die bereits erwähnte bessere Fahrdynamik und präzisere Steuerung des Übersetzungsverhältnisses und der Fahrgeschwindigkeit.

Besonders bevorzugt ist die Steuereinrichtung derart ausgestaltet, dass über sie der oder die Verdrängungsvolumensollwerte in Abhängigkeit aller sieben genannten Parameter Fahrbereich, Übersetzungsverhältnis, Leistungsflussrichtung, Arbeitsdruck, Grenzarbeitsdruck, Getriebeeingangsdrehzahl und Druckmitteltemperatur verändert ist oder sind.

Die Leistung kann über einen Summierabschnitt des Getriebes zu einer Ausgangsleistung am Getriebeausgang summierbar sein. Das Getriebe kann eingangsgekoppelt ausgeführt sein, wobei die Verzweigung über eine Zahnradstufe und der Summierabschnitt über ein Planetengetriebe ausgebildet sein kann. In diesem Fall stellt sich an der Verzweigung ein festes Drehzahlverhältnis und an der Summierung ein festes Momentenverhältnis ein. Alternativ dazu kann das Getriebe ausgangsgekoppelt ausgeführt sein, wobei die Verzweigung über ein Planetengetriebe und der Summierabschnitt über eine Zahnradstufe ausgebildet sein kann. Dann stellt sich an der Verzweigung ein festes Momentenverhältnis und an der Summierung ein festes Drehzahlverhältnis ein. Alternativ dazu kann das Getriebe aufbauend auf diesen Konzepten eine Mischarchitektur aufweisen.

Die Leistungsflussrichtung kann positiv oder negativ sein. Sie ist als positiv definiert, wenn eine mechanische Leistung vom Getriebeeingang aufgenommen, über den oder die Leistungszweige an den Getriebeausgang übertragen und von diesem abgegeben wird. In diesem Fall ist ein Zugbetrieb des Fahrantriebes gegeben. Bei einer Leistungsaufnahme am Getriebeausgang und einer Leistungsabgabe am Getriebeeingang ist sie negativ definiert, wodurch ein Schubbetrieb vorliegt.

Die Steuereinrichtung kann derart ausgestaltet sein, dass über sie die Verdrängungsvolumensollwerte beider Hydromaschinen - am Bedarf orientiert oder verändert - über eine darin gespeicherte inverse Kinematik ermittelbar sind. Diese weist für jeden der Fahrbereiche wenigstens eine Gleichung mit dem Fahrbereich zugeordneten Faktoren auf. Letztgenannte sind Gleichungskonstanten, über die eine Kinematik des Getriebes abgebildet ist. Über die beiden so ermittelten Verdrängungsvolumensollwerte, von denen wie bereits erwähnt wenigstens einer verändert ist, ist über die Steuereinrichtung folglich ein Übersetzungsverhältnis des hydraulischen Leistungszweigs ermittelbar.

Das Getriebe kann eine äußere oder innere Leistungsverzweigung aufweisen. Erfindungsgemäß weist auch die zweite Hydromaschine eine Verstelleinrichtung auf und die Steuereinrichtung ist derart ausgestaltet, dass über sie der Verdrängungsvolumensollwert der zweiten Hydromaschine zumindest in einem ersten Intervall des Übersetzungsverhältnisses derart verändert ist, dass er auf einen Bruchteil eines maximalen, insbesondere maximal möglichen Verdrängungsvolumensollwertes der zweiten Hydromaschine begrenzt ist.

Der Bruchteil beträgt vorzugsweise 50% bis 90%, besonders bevorzugt 70% bis 80% des maximal möglichen Verdrängungsvolumensollwertes. Vorzugsweise deckt das erste Intervall einen überwiegenden Bereich des Übersetzungsverhältnisses, besonders bevorzugt alle möglichen, bestimmungsgemäßen Übersetzungsverhältnisse und damit Fahrbereiche ab.

Der Vorteil der Begrenzung auf diesen Bruchteil ergibt sich aus folgendem Zusammenhang: Für ein gegebenes, an der zweiten Hydromaschine wirksames Lastmoment ergibt sich in der Hochdruck aufweisenden Arbeitsleitung aufgrund des kleineren Verdrängungsvolumensollwertes - und damit des zugeordneten Istwertes - ein höherer Arbeitsdruck als bei unbegrenztem, maximalem Verdrängungsvolumensollwert. Vorteilhaft ist dies, wenn das Druckmittel dieser Arbeitsleitung als Steuerdruckmittelquelle der Verstelleinrichtung der zweiten Hydromaschine vorgesehen ist. Je höher der Arbeitsdruck, umso höher ist auch der davon abgreifbare Steuerdruck. Mit dem höheren Steuerdruck ergibt sich wiederum für die zweite Hydromaschine eine höhere Verstelldynamik, wodurch die Restabweichung des Übersetzungsverhältnisses vom angeforderten Übersetzungsverhältnis oder Bedarf minimierbar ist. Für den Bediener ergeben sich auch hier wieder die bereits erwähnte verbesserte Fahrdynamik und präzisere Steuerung des Übersetzungsverhältnisses und der Fahrgeschwindigkeit.

Ein weiterer Vorteil ist dabei, dass aufgrund des begrenzten Verdrängungsvolumensollwertes der zweiten Hydromaschine ein Bereich des Übersetzungsverhältnisses, in dem dieses allein von der Verstellung der ersten Hydromaschine abhängt, vergrößert ist. Dadurch ist eine gleichmäßigere, stetigere Steuerung des Übersetzungsverhältnisses erreichbar.

Bei herkömmlichen leistungsverzeigten Getrieben ist der Verdrängungsvolumensollwert der zweiten Hydromaschine hingegen unbegrenzt und beträgt dann 100% des maximal möglichen Verdrängungsvolumensollwertes, wenn die erste Hydromaschine von der Steuereinrichtung mit ihrem am Bedarf orientierten Verdrängungsvolumensollwert angesteuert wird. Gemäß der vorangehenden Beschreibung sind damit nachteilig der geringere Steuerdruck und die geringere Verstelldynamik der zweiten Hydromaschine, sowie die höhere Restabweichung verbunden.

Ein weiterer Vorteil besteht in der Anhebung des Arbeitsdruckes in einen Bereich, in welchem die volumetrischen Wirkungsgrade der Hydromaschinen höher liegen und somit relativ gesehen geringere Verluste bei der Leistungsübertragung entstehen.

Bei einer weiteren vorteilhaften Weiterbildung des Getriebes ist die Steuereinrichtung derart ausgestaltet, dass über sie Verstelleinrichtungen beider Hydromaschinen, welche zur Verstellung von deren Verdrängungsvolumina vorgesehen sind, etwa zeitgleich, insbesondere unabhängig voneinander, ansteuerbar sind.

Über diese zeitgleiche Ansteuerung können Totzeiten beziehungsweise Antwortzeit der einen oder beider Hydromaschinen kompensiert werden, so dass sich ein kontinuierlicherer und stabilerer Verlauf des Übersetzungsverhältnisses und damit der Fahrgeschwindigkeit ergibt.

Bevorzugt ist die Steuereinrichtung dabei derart ausgestaltet, dass zumindest in einem insbesondere der Totzeit entsprechenden zweiten Intervall des Übersetzungsverhältnisses die Verdrängungsvolumensollwerte der Hydromaschinen von null verschiedene Gradienten mit unterschiedlichen Vorzeichen aufweisen können.

Somit kann während eine der Hydromaschinen beispielsweise noch mit ansteigendem Verdrängungsvolumensollwert angesteuert wird, die jeweils andere bereits mit abfallendem Verdrängungsvolumensollwert angesteuert werden, oder umgekehrt.

In einer besonders vorteilhaften Weiterbildung des Getriebes ist die Steuereinrichtung derart ausgestaltet, dass über sie der Verdrängungsvolumensollwert gegenüber dem am aktuellen Bedarf orientierten Verdrängungsvolumensollwert zumindest in Abhängigkeit einer Totzeit oder Antwortzeit einer der Hydromaschinen verändert ist.

Dies ist besonders in Fahrbereichen von Vorteil, in denen zur Verstellung des Übersetzungsverhältnisses, beispielsweise bei dessen Erhöhung während einer Beschleunigung, der Verdrängungsvolumensollwert einer der beiden Hydromaschinen von einem variabel gesteuerten hin zu einem konstanten Wert und der Verdrängungsvolumensollwert der anderen der beiden Hydromaschine umgekehrt von einem konstanten hin zu einem variabel gesteuerten Wert übergehen soll.

Bei herkömmlichen leistungsverzweigten Getrieben erfolgt in derartigen Fahrbereichen die Ansteuerung der anderen der beiden Hydromaschinen erst ab einem Übersetzungsverhältnis bei dem das Verdrängungsvolumen oder der Verdrängungsvolumensollwert der einen Hydromaschine den genannten konstanten Wert erreicht hat, also sequentiell. Während der dann verstreichenden Totzeit der anderen Hydromaschine ergibt sich zunächst keine Änderung des Übersetzungsverhältnisses mehr, was im Fahrbetrieb als Ruck wahrgenommen werden kann. Das beeinträchtigt das Fahrgefühl eines Bedieners und die Präzision des Fahrantriebs. Erst nach Verstreichen der Totzeit wird der Verdrängungsvolumensollwert der anderen Hydromaschine wirksam, so dass die Verstellung des Übersetzungsverhältnisses weiter fortschreiten kann.

Dem gegenüber ermöglicht die erwähnte Ansteuerung in Abhängigkeit der Totzeit eine verfrühte Ansteuerung mit einem zukünftigen Verdrängungsvolumensollwert der anderen Hydromaschine. In anderen Worten: Der Verdrängungsvolumensollwert der anderen Hydromaschine ist in Abhängigkeit der Totzeit derart gegen den aktuellen Bedarf abgeändert, dass er dem Verdrängungsvolumensollwert eines zukünftigen oder antizipierten Bedarfs oder angeforderten Übersetzungsverhältnisses entspricht. Dadurch ist in dem Moment, in dem die eine Hydromaschine ihren konstanten Wert erreicht, die Totzeit der anderen Hydromaschine bereits verstrichen und das Verdrängungsvolumen der letztgenannten Hydromaschine geht vom konstanten zum variabel gesteuerten Wert über und es ergibt sich ein kontinuierlicher, stabiler Verlauf des Übersetzungsverhältnisses und der Fahrgeschwindigkeit ohne merkliches Rucken.

Vorzugsweise ist die Steuereinrichtung derart ausgestaltet, dass über sie der Verdrängungsvolumensollwert gegenüber dem am aktuellen Bedarf orientierten Verdrängungsvolumensollwert nicht nur in Abhängigkeit der Totzeit oder Antwortzeit, sondern zudem zumindest in Abhängigkeit einer Änderungsrate oder eines Gradienten des Übersetzungsverhältnisses verändert ist.

In einer Ausführungsform ist die Steuereinrichtung derart ausgestaltet, dass das zweite Intervall Extremwerte der Verdrängungsvolumensollwerte der Hydromaschinen aufweist.

Weiterhin ist eine Ausführungsform möglich, in der die Steuereinrichtung derart ausgestaltet ist, dass das zweite Intervall Extremwerte von Istwerten der Verdrängungsvolumina aufweist.

Dabei ist es möglich, dass die Steuereinrichtung derart ausgestaltet ist, dass die Extremwerte der Istwerte an einer Grenze des zweiten Intervalls angeordnet sind.

Die Hydromaschine ist bevorzugt als Axialkolbenmaschine in Schrägscheiben oder Schrägachsenbauweise ausgestaltet. In diesem Fall ist das Verdrängungsvolumen proportional zu einem Schwenkwinkel der Schrägscheibe oder Schrägachse.

Ein Verfahren zur Steuerung des Übersetzungsverhältnisses eines leistungsverzweigten Getriebes, das gemäß einem oder mehreren Aspekten der vorhergehenden Beschreibung ausgestaltet ist, hat zumindest die Schritte "Ermittlung des gegenüber dem am Bedarf orientierten Verdrängungsvolumensollwert veränderten Verdrängungsvolumensollwertes für wenigstens eine Hydromaschine" und "Ansteuerung der Verstelleinrichtung der wenigstens einen Hydromaschine mit dem derart veränderten Verdrängungsvolumensollwert"

Dieses Verfahren bringt die gleichen Vorteile mit sich, wie sie bereits für die Vorrichtung des leistungsverzweigten Getriebes geschildert wurden: Das Übersetzungsverhältnis des Getriebes und / oder die Fahrgeschwindigkeit des Fahrantriebs kann dem Bedarf dynamischer und zudem kontinuierlicher nachgeführt werden. Für einen Bediener des Getriebes oder Fahrantriebs macht sich das in einer besseren Fahrdynamik und zudem in einer präziseren Steuerung des Übersetzungsverhältnisses und der Fahrgeschwindigkeit und einem ruckfreieren, und dadurch komfortableren und präziseren Fahrbetrieb bemerkbar.

Bei einer bevorzugten Weiterbildung des Verfahrens erfolgt der Schritt "Ermittlung des gegenüber dem am Bedarf orientierten Verdrängungsvolumensollwert veränderten Verdrängungsvolumensollwertes für die wenigstens eine Hydromaschine" zumindest in Abhängigkeit des Fahrbereichs, also mittelbar oder unmittelbar in Abhängigkeit des Übersetzungsverhältnisses, und / oder des Übersetzungsverhältnisses und / oder einer Leistungsflussrichtung des Getriebes und / oder eines Arbeitsdrucks der Arbeitsleitungen und / oder eines Grenzarbeitsdrucks der Arbeitsleitungen und / oder einer Getriebeeingangsdrehzahl ($n_E$) und / oder einer Druckmitteltemperatur.

Die Vorteile dieser Ermittlung und Ansteuerung in Abhängigkeit der genannten Parameter sind der vorangegangenen Beschreibung entnehmbar.

Vorzugsweise erfolgt dabei die Ermittlung des oder der Verdrängungsvolumensollwerte in Abhängigkeit aller sieben genannten Parameter Fahrbereich, Übersetzungsverhältnis, Leistungsflussrichtung, Arbeitsdruck, Grenzarbeitsdruck, Getriebeeingangsdrehzahl und Druckmitteltemperatur.

Vorzugsweise umfasst das Verfahren einen Schritt "Ermittlung der Verdrängungsvolumensollwerte beider Hydromaschinen über Gleichungen einer inversen Kinematik", wobei die inverse Kinematik bereits in der vorangegangenen Beschreibung beschrieben wurde.

Unter der Voraussetzung, dass auch die zweite Hydromaschine die Verstelleinrichtung aufweist, erfolgt erfindungsgemäß der Schritt "Ermittlung des gegenüber dem am Bedarf orientierten Verdrängungsvolumensollwert veränderten Verdrängungsvolumensollwertes für die zweite Hydromaschine" zumindest in einem ersten Intervall des Übersetzungsverhältnisses zumindest über einen Schritt "Begrenzung des Verdrängungsvolumensollwertes auf einen Bruchteil eines maximalen beziehungsweise maximal möglichen Verdrängungsvolumensollwertes".

Die Veränderung erfolgt hier also über eine Begrenzung des Verdrängungsvolumensollwertes. Wie bereits erwähnt beträgt der Bruchteil vorzugsweise 50% bis 90%, besonders bevorzugt 70% bis 80% des maximal möglichen Verdrängungsvolumens der zweiten Hydromaschine und das erste Intervall deckt einen überwiegenden Bereich des Übersetzungsverhältnisses, besonders bevorzugt alle möglichen, bestimmungsgemäßen Übersetzungsverhältnisse und damit Fahrbereiche und Fahrbereichsabschnitte ab.

Auch der Vorteil dieser Begrenzung ist der vorangegangenen Beschreibung zu entnehmen.

Unter der Voraussetzung, dass beide Hydromaschinen eine Verstelleinrichtung aufweisen, erfolgt in einer vorteilhaften Weiterbildung der Schritt "Ansteuerung der Verstelleinrichtung der wenigstens einen Hydromaschine mit dem derart veränderten Verdrängungsvolumensollwert" etwa zeitgleich, insbesondere unabhängig voneinander, mit einem Schritt "Ansteuerung der Verstelleinrichtung der jeweils anderen Hydromaschine mit einem Verdrängungsvolumensollwert". Letztgenannter kann ebenso erfindungsgemäß verändert oder aber am Bedarf orientiert sein.

Wie der vorangegangenen Beschreibung bereits entnehmbar ist, können über die etwa zeitgleiche Ansteuerung Totzeiten beziehungsweise Antwortzeiten der einen oder beider Hydromaschinen kompensiert werden, so dass sich ein kontinuierlicherer und stabilerer Verlauf des Übersetzungsverhältnisses und der Fahrgeschwindigkeit ergibt.

Dabei ist es von Vorteil, wenn das Verfahren derart ausgestaltet ist, dass in einem, insbesondere der Totzeit entsprechenden zweiten Intervall des Übersetzungsverhältnisses die Verdrängungsvolumensollwerte beider Hydromaschinen von null verschiedene Gradienten mit unterschiedlichen Vorzeichen aufweisen können. Dann kann während eine der Hydromaschinen beispielsweise noch mit ansteigendem Verdrängungsvolumensollwert angesteuert wird, die jeweils andere bereits mit abfallendem Verdrängungsvolumensollwert angesteuert werden, oder umgekehrt.

Unter der Voraussetzung, dass beide Hydromaschinen eine Verstelleinrichtung aufweisen, erfolgt der Schritt "Ermittlung des gegenüber dem am Bedarf orientierten Verdrängungsvolumensollwert veränderten Verdrängungsvolumensollwertes für wenigstens eine Hydromaschine" besonders vorteilhaft zumindest in Abhängigkeit der Totzeit oder Antwortzeit einer der Hydromaschinen.

Im Folgenden werden ein Ausführungsbeispiel eines erfindungsgemäßen Getriebes und drei Ausführungsbeispiele erfindungsgemäßer Verfahren zur Getriebesteuerung anhand von zehn Figuren näher erläutert. Es zeigen

Figur 1 einen hydraulischen Schaltplan eines Ausführungsbeispiels eines leistungsverzweigten Getriebes eines Fahrantriebes,

Figur 2a ein Verdrängungsvolumen-Übersetzungsverhältnis-Diagramm eines herkömmlichen Verfahrens zur Steuerung des Getriebes gemäß Figur 1,

Figur 2b ein Verdrängungsvolumen-Übersetzungsverhältnis-Diagramm eines ersten Ausführungsbeispiels eines Verfahrens zur Steuerung des Getriebes gemäß Figur 1,

Figur 3a ein Flussdiagramm eines zweiten Ausführungsbeispiels eines Verfahrens zur Steuerung des Getriebes gemäß Figur 1,

Figur 3b eine Berechnung einer hydrostatischen Wirkungsgrad-Kompensation des Verfahrens gemäß Figur 3a,

Figur 3c eine Berechnung einer inversen Kinematik des Verfahrens gemäß den Figuren 3a und 3b,

Figur 4a Verläufe von Korrekturfaktoren bei Ausführung des Verfahrens gemäß den Figuren 3a bis 3c und eines Verfahrens zur Totzeitkompensation zur Steuerung des Getriebes gemäß Figur 1,

Figur 4b mit Figur 4a korrelierende Druckverläufe,

Figur 4c ein mit den Figuren 4a und 4b korrelierendes Schwenkwinkel-ZeitDiagramm mit Schwenkwinkelsollwerten und Schwenkwinkelistwerten, und

Figur 4d ein mit den Figuren 4a, 4b und 4c korrelierendes Übersetzungsverhältnis-Zeit-Diagramm mit einem Sollwert und einem Istwert des Übersetzungsverhältnisses.

Zur einfacheren Orientierung werden im Folgenden für figurübergreifend gleichbleibende Komponenten gleichbleibende Bezugszeichen verwendet.

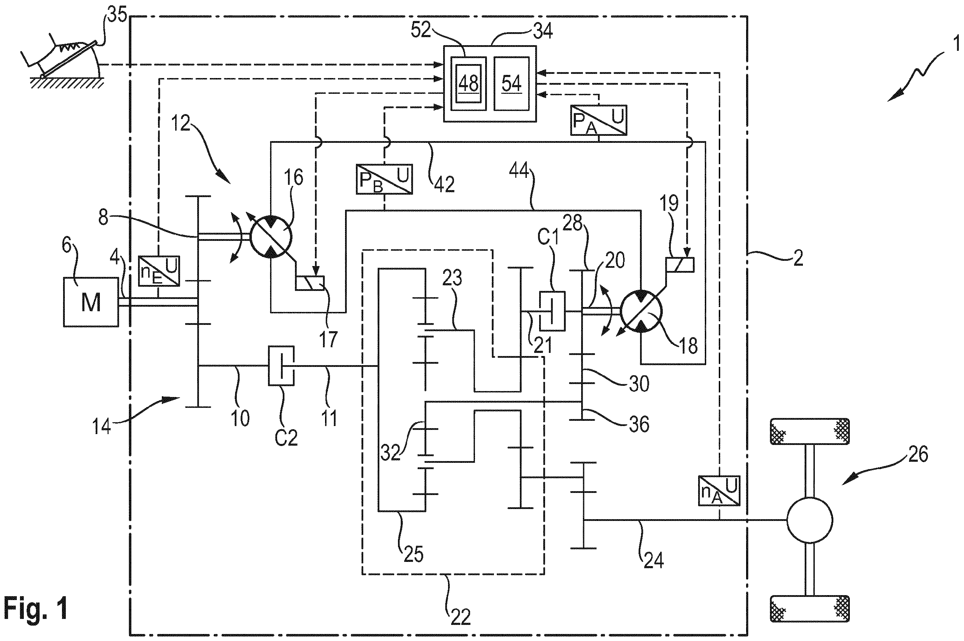

Gemäß Figur 1 ist in einem Fahrantrieb 1 eines Fahrzeugs, beispielsweise eines Frontladers, ein leistungsverzweigtes Getriebe 2 vorgesehen. Dieses Getriebe 2 hat einen Getriebeeingang mit einer Eingangswelle 4, die mit einem Antriebsmotor beziehungsweise mit einer Antriebsmaschine 6 verbunden ist. Über Zahnräder ist die Eingangswelle 4 jeweils mit Eingangswellen 8, 10 verbunden. Die Eingangswelle 8 ist einem hydraulischen, ersten Leistungszweig 12 und die Eingangswelle 10 einem mechanischen, zweiten Leistungszweig 14 zugeordnet. Der hydraulische Leistungszweig 12 weist eine zur Förderung in zwei Richtungen als Hydropumpe ausgeführte, verstellbare, erste Hydromaschine 16 und eine ebenso für beide Strömungsrichtungen jedoch als Hydromotor ausgeführte, verstellbare, zweite Hydromaschine 18 auf. Beide sind als Axialkolbenmaschinen ausgeführt und in einem geschlossenen hydraulischen Kreis über eine erste 42 und eine zweite Arbeitsleitung 44 fluidisch miteinander verbunden, wobei in diesem Ausführungsbeispiel die erste Hydromaschine 16 in Schrägscheiben- und die zweite Hydromaschine 18 in Schrägachsenbauweise ausgestaltet ist. Natürlich sind auch alternative Ausführungsformen und abweichende Kombinationen der Bauweisen möglich. Zu betonen ist, dass beide Hydromaschinen sowohl im Pumpen- als auch im Motorenbetrieb betreibbar sind.

Zum Verstellen ihres jeweiligen Verdrängungsvolumens weist jede Hydromaschine 16, 18 eines Verstelleinrichtung 17, 19 auf. Beide Verstelleinrichtungen 17, 19 sind über Signalleitungen mit einer Steuereinrichtung 34 verbunden, die wiederum über eine Signalleitung mit einem Fahrpedal 35 verbunden ist. Die Steuereinrichtung 34 hat eine Speichereinheit 52, in der ein Verfahren 48 zur Ausführung gespeichert ist. Das Verfahren 48 dient der Steuerung der Verdrängungsvolumina der Hydromaschinen 16, 18 und ist in einer Prozessoreinheit 54 der Steuereinrichtung 34 ausführbar.

Die erste Hydromaschine 16 wird über die Eingangswelle 8 von der Antriebsmaschine 6 angetrieben. Die zweite Hydromaschine 18 hat eine Ausgangswelle 20. Diese 20 kann über eine erste Kupplung C1 und eine Zahnradpaarung mit einem Steg 23 eines einstufigen Planetengetriebes, über das ein Summierabschnitt 22 des Getriebes 2 ausgebildet ist, verbunden werden. Ein erstes Motorzahnrad 28 ist mit der Ausgangswelle 20 drehfest verbunden und treibt über ein Zwischenzahnrad 30 ein drehfest mit einem Sonnenrad 32 des Planetengetriebes verbundenes Zahnrad 36 an. Dementsprechend wird das Sonnenrad 32 permanent in der Drehrichtung des Hydromotors 18 und mit einer von der zweiten Hydromaschine 18 direkt abhängigen Drehzahl angetrieben. Bei geschlossener Kupplung C1 wird der Steg 23 mit einer von der zweiten Hydromaschine 18 direkt abhängigen Drehzahl angetrieben, wobei die Drehrichtungen des Steges 23 und der zweiten Hydromaschine 18 gegenläufig sind.

Die Eingangswelle 10 des mechanischen Leistungszweigs 14 kann über eine zweite Kupplung C2 mit einer Eingangswelle 11 des Summierabschnitts 22, die drehfeste mit einem Hohlrad 25 verbunden ist, verbunden werden. Infolge von Drehzahlen des Sonnenrades 32 und des Hohlrades 25 des Summiergetriebeabschnitts 22 stellt sich eine Ausgangsdrehzahl des Stegs 23 ein. Mittels weiterer Zahnräder wird die Rotation des Stegs 23 auf die Abtriebswelle 24 des Getriebes übertragen.

Für eine tiefer gehende Beschreibung des Aufbaus des Fahrantriebs 1 und des Getriebes 2 und zum Zwecke der Offenbarung sei an dieser Stelle auf die Offenlegungsschriften DE 10 2007 037 107 A1 und DE 10 2007 037 664 A1 verwiesen.

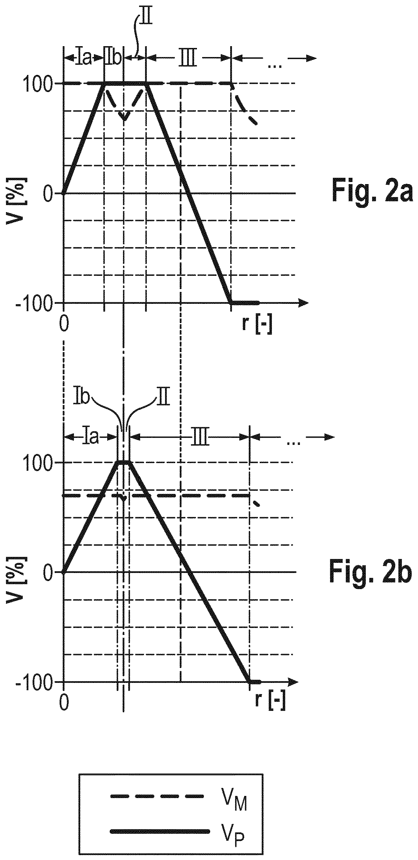

Die Beschreibung eines ersten Ausführungsbeispiels eines erfindungsgemäßen Verfahrens zur Steuerung des Getriebes 2 erfolgt mit Bezug zu den Figuren 1 und 2b, wobei die Figur 2a, die Verläufe von Verdrängungsvolumina der Hydromaschinen 16, 18 bei Anwendung eines herkömmlichen Verfahrens zur Steuerung des Getriebes 2 zeigt, lediglich der Verdeutlichung des Effektes der erfindungsgemäßen Steuerung dient. Die Beschreibung beschränkt sich dabei auf zum Verständnis der Erfindung ausreichende Fahrbereichsabschnitte $I_a$, $I_b$ und II. Das Prinzip ist auf alle weiteren Fahrbereichsabschnitte entsprechend übertragbar.

Figur 2a zeigt den Verlauf des Istwertes des Verdrängungsvolumens $v_P$ der ersten Hydromaschine 16 über dem Übersetzungsverhältnisses r als durchgezogene Kurve. Weiterhin zeigt sie den Verlauf des Istwertes des Verdrängungsvolumens $v_M$ der zweiten Hydromaschine 18 als gestrichelte Kurve. Die Achse des Übersetzungsverhältnisses r ist in vier verschiedene Fahrbereichsabschnitte $I_a$, $I_b$, II und III unterteilt. In einem ersten Fahrbereichsabschnitt $I_a$ wird die erste Hydromaschine 16, von einem Verdrängungsvolumen 0 ausgehend, in Richtung ihres maximalen Verdrängungsvolumens (100%) verstellt. Dazu wird sie von der Steuereinrichtung 34 gemäß Figur 1 mit einem variablen Verdrängungsvolumensollwert $v_{Ps}$ (nicht dargestellt) angesteuert. In diesem Fahrbereich $I_a$ weist das Verdrängungsvolumen $v_M$ der zweiten Hydromaschine 18 konstant seinen Maximalwert (100 %) auf. In dem Moment, in dem auch das Verdrängungsvolumen $v_P$ seinen maximalen Wert (100 %) erreicht, ist eine weitere Erhöhung des Übersetzungsverhältnisses r nur durch eine Verringerung des Verdrängungsvolumens $v_M$ des Hydromotors 18 möglich. Dazu geht die Steuereinrichtung 34 gemäß Figur 1 von der bis dahin vorliegenden variablen Ansteuerung der ersten Hydromaschine 16 beziehungsweise Hydropumpe zu einer variablen Ansteuerung der zweiten Hydromaschine 18 beziehungsweise des Hydromotors über. Dazu wird letztgenannter von der Steuereinrichtung 34 gemäß Figur 1 mit einem variablen Verdrängungsvolumensollwert $v_{Ms}$ (nicht dargestellt) angesteuert. Gemäß Figur 2a wird so ab dem Fahrbereich $I_b$ das Verdrängungsvolumen $v_M$ abgesenkt, woraus das zunehmende Übersetzungsverhältnis r resultiert. Gemäß dem herkömmlichen Steuerungsverfahren werden die beiden Hydromaschinen 16, 18 also rein sequentiell mit variablem Verdrängungsvolumensollwert $v_{Ps}$, $v_{Ms}$ angesteuert und der Hydromotor 18 beginnt seinen Schwenkwinkel erst zu verstellen, wenn die Hydropumpe 16 100 % ihres Verdrängungsvolumens erreicht hat und umgekehrt.

Gemäß dem herkömmlichen Steuerungsverfahren gemäß Figur 2a weist die zweite Hydromaschine beziehungsweise der Hydromotor 18 somit in den Fahrbereichsabschnitten $I_a$, III und eventuell weiteren vorhanden Fahrbereichsabschnitten mit höheren Übersetzungsverhältnissen r sein maximales Verdrängungsvolumen $v_M$ auf. Demgemäß ist der zugehörige, nicht dargestellte Verdrängungsvolumensollwert $v_{Ms}$ ebenso maximal groß. Die herkömmliche Steuerung unter Ausnutzung des maximalen Verdrängungsvolumens der zweiten Hydromaschine 18 entspricht dabei einer rein am aktuellen Bedarf orientierten Steuerung.

Es sei bemerkt, dass über die Fahrbereichsabschnitte $I_a$ und $I_b$ ein rein hydrostatischer, unverzeigter Fahrbereich ausgebildet ist.

Auch Figur 2b zeigt eine sequentielle Ansteuerung der beiden Hydromaschinen 16, 18. Anders als bei der herkömmlichen Steuerung gemäß Figur 2a hingegen ist der Verdrängungsvolumensollwert $v_{Ms}$ der zweiten Hydromaschine 18 gegenüber seinem am Bedarf orientierten Verdrängungsvolumensollwert zumindest in den Fahrbereichsabschnitten $I_a$, $I_b$, II und III verändert, indem er auf einen Bruchteil begrenzt ist. Dabei kommt das in der Speichereinheit 52 abgelegte und in der Prozessoreinheit 54 ausführbare Verfahren 48 zum Einsatz. Der Bruchteil beträgt dabei über den von diesen Fahrbereichsabschnitten abgedeckten Bereich des Übersetzungsverhältnisses r hier beispielsweise 70 % des maximal möglichen Verdrängungsvolumens, ist also in diesem Fall um mindestens -30% gegenüber dem am Bedarf orientierten verändert. Wie bereits im allgemeinen Teil der Beschreibung dargelegt, resultiert daraus ein höherer Arbeitsdruck $p_{A,B}$, je nach Drehrichtung und Leistungsflussrichtung $P_{+/-}$ entweder in der Arbeitsleitung 42 oder 44, wodurch sich die verbesserte Verstelldynamik und somit dynamisch eine kleinere Restabweichung vom angeforderten Übersetzungsverhältnis $r_a$ ergeben. Für den Bediener ergibt sich der Vorteil einer präziseren und dynamischeren Steuerung des Fahrantriebs 1 beziehungsweise des Getriebes 2. Dass durch die Begrenzung des Verdrängungsvolumensollwertes $v_{Ms}$ der zweiten Hydromaschine 18 auf hier 70% deren Einfluss auf die Steuerung des Übersetzungsverhältnisses r abnimmt, ist daran zu erkennen, dass die Fahrbereichsabschnitte $I_b$, II und eventuell weitere vorhandene Fahrbereichsabschnitte mit höherem Übersetzungsverhältnis r, in denen sich das Übersetzungsverhältnis r allein aus der variablen Ansteuerung der zweiten Hydromaschine 18 ergibt, gemäß Figur 2b schmaler als bei herkömmlicher Steuerung gemäß Figur 2a sind. Entsprechend ist der Einfluss der ersten Hydromaschine 16 vergrößert und die ihr zugeordneten Fahrbereichsabschnitte Ia und III sind verbreitert. Hieraus ergibt sich der bereits erwähnte Vorteil, dass die Steuerung des Übersetzungsverhältnisses über weite Bereiche dynamischer, gleichmäßiger und stetiger erfolgen kann.

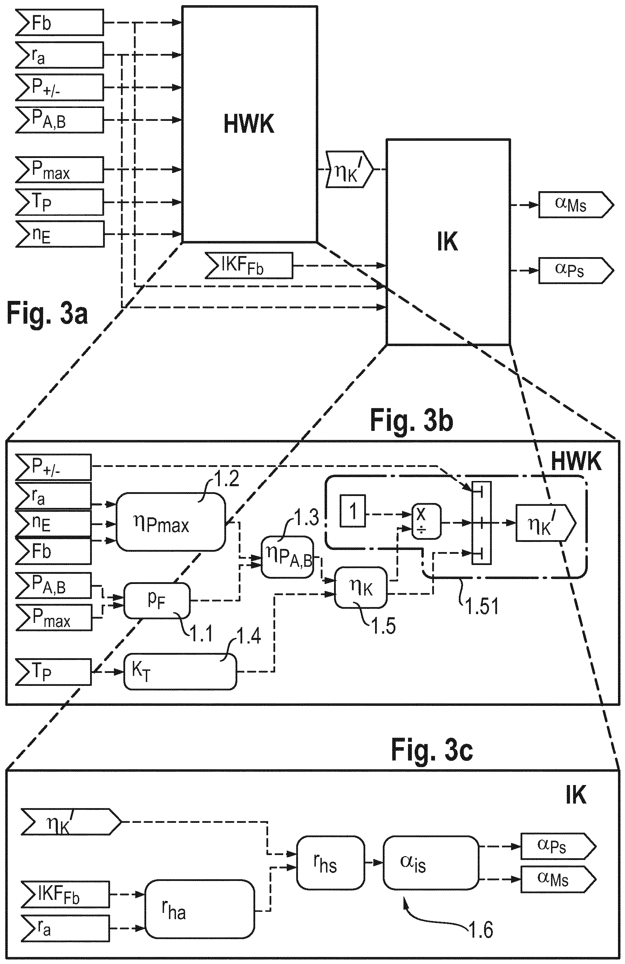

Figur 3a bis 3c zeigt ein zweites Ausführungsbeispiel eines Verfahrens zur Steuerung des Getriebes gemäß Figur 1. Ziel des Verfahrens ist die Ermittlung zweier Verdrängungsvolumensollwerte in Form zweier Sollwerte von Schwenkwinkeln $\alpha_{Ms}$, $\alpha_{Ps}$ des Hydromotors 18 und der Hydropumpe 16. Das Verfahren läuft dabei in zwei Phasen ab. In einer ersten Phase, der sogenannten hydraulischen Wirkungsgradkompensation HWK, erfolgt die Berechnung eines Korrekturfaktors $\eta'_K$ in Abhängigkeit des Fahrbereichs Fb, des angeforderten Übersetzungsverhältnisses $r_a$, einer Leis-

tungsflussrichtung $P_{+/-}$, eines aktuellen Arbeitsdrucks $p_{A,B}$ in der belasteten Arbeitsleitung 42 oder 44, des maximal zulässigen Arbeitsdrucks $p_{max}$, der Öl- oder Sumpftemperatur $T_p$ und der Getriebeeingangsdrehzahl $n_E$. Der errechnete Korrekturfaktor $\eta'_K$ geht im Folgenden gemeinsam mit kinematischen Faktoren des Fahrbereichs $IKF_{Fb}$, dem Fahrbereich Fb und dem angeforderten Übersetzungsverhältnis $r_a$ in die Berechnung der inversen Kinematik IK ein. Letztgenannte stellt eine zweite Phase des Verfahrens dar. Die inverse Kinematik IK liefert die den Verdrängungsvolumenwerten $v_{Ms}$, $v_{Ps}$ entsprechenden Schwenkwinkelsollwerte $\alpha_{Ms}$ und $\alpha_{Ps}$.

Figur 3b zeigt den detaillierten Berechnungsablauf der hydraulischen Wirkungsgradkompensation HWK, Figur 3c den der inversen Kinematik IK. Die Gleichungen, die dabei zum Tragen kommen, sind:

$$\text{Gleichung 1.1:} \qquad p_F = p_{A,B}/p_{max}$$

$$\text{Gleichung 1.2:} \qquad \eta_{p_{max}} = f(r_a, n_E, P_{+/-})$$

$$\text{Gleichung 1.3:} \qquad \eta_{P_{A,B}} = f(p_F, \eta_{p_{max}})$$

$$\text{Gleichung 1.4:} \qquad K_T = f(T_p)$$

$$\text{Gleichung 1.5:} \qquad \eta_K = \eta_{P_{A,B}} * K_T$$

$$\text{Gleichung 1.51:} \qquad \eta'_K = f(P_{+/-}, \eta_K)$$

$$\text{Gleichung 1.6:} \qquad r_{hs} = r_{ha} * \eta'_K$$

mit:

| | |
|---|---|
| $p_F$ : | Druckfaktor; variabel abhängig von beispielsweise Übersetzungsverhältnis r, angeforderter Geschwindigkeit, angeforderter Leistung |
| $p_{A,B}$ : | aktueller Arbeitsdruck in Arbeitsleitung 42 oder 44 |
| $p_{max}$ : | maximaler Arbeitsdruck in Arbeitsleitung 42 oder 44 |
| $\eta_{p_{max}}$ : | maximaler Korrekturfaktor; ermittelt aus vorausberechneten Tabellen und skaliert in Abhängigkeit des Druckfaktors $p_F$ |
| $r_a$ : | angefordertes Übersetzungsverhältnis |
| $n_E$ : | aktuelle Getriebeeingangsdrehzahl an Eingangswelle 4 |
| $P_{+/-}$ : | Leistungsflussrichtung |
| $\eta_{P_{A,B}}$ | Korrekturfaktor für aktuellen Arbeitsdruck $p_{A,B}$ |
| $K_T$ : | Temperaturkorrekturfaktor |
| $T_P$ : | Druckmittel- oder Sumpftemperatur |
| $\eta_K$ : | temperaturabhängiger Korrekturfaktor |
| $\eta'_K$ : | Korrekturfaktor |
| $r_{hs}$ : | korrigiertes Übersetzungsverhältnis (korrigierter Sollwert) des hydraulischen Leistungszweigs 12 |
| $r_{ha}$ : | angefordertes Übersetzungsverhältnis (angeforderter Sollwert) des hydraulischen Leistungszweigs 12 |
| $\alpha_{is}$ : | Schwenkwinkelverhältnissollwert |
| $\alpha_{Ps}$: | Schwenkwinkelsollwert der ersten Hydromaschine 16 |
| $\alpha_{Ms}$ : | Schwenkwinkelsollwert der zweiten Hydromaschine 18 |

Wie bereits in der vorangegangenen allgemeinen Beschreibung erwähnt, wird durch diese Korrektur eine Restabweichung des Übersetzungsverhältnisses r vom angeforderten Übersetzungsverhältnis $r_a$ unter Berücksichtigung der volumetrischen und mechanischen Wirkungsgrade der Hydromaschinen reduziert, was für den Bediener in der bereits erwähnten höheren Fahrdynamik und präziseren Steuerung des Übersetzungsverhältnisses und der Fahrgeschwindigkeit resultiert.

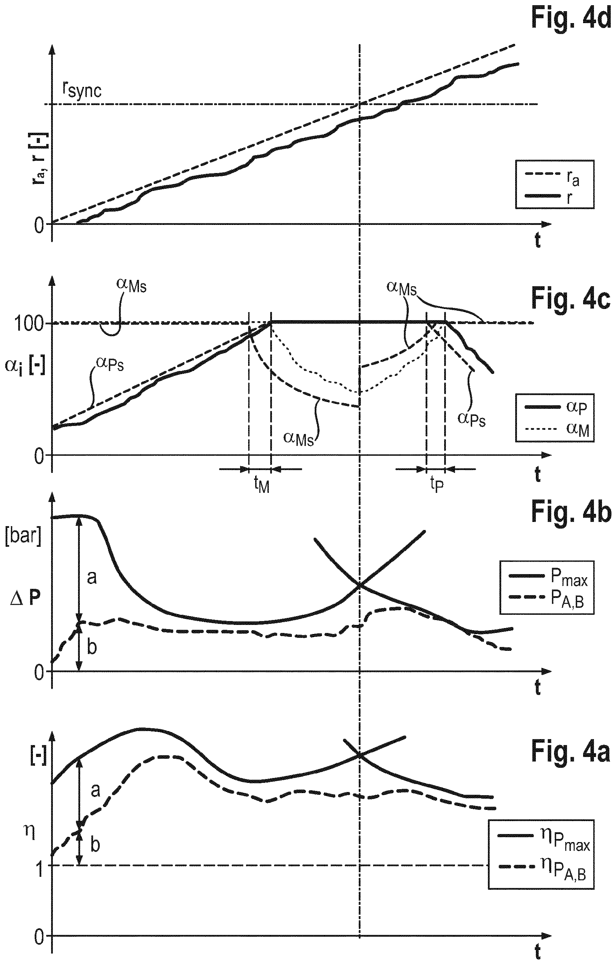

Die Figuren 4a bis 4d zeigen nun weitere Diagramme, die die Auswirkung der bereits vorgestellten Verfahren und die Auswirkung eines weiteren Ausführungsbeispiels eines Verfahrens, einer Totzeitkompensation, auf die Steuerung des Übersetzungsverhältnisses r darstellen.

Figur 4d zeigt den Verlauf des tatsächlichen Übersetzungsverhältnisses r als durchgezogene Kurve und darüber den Verlauf des angeforderten Übersetzungsverhältnisses $r_a$ als Funktion der Zeit t. Gut zu erkennen ist, dass der tatsächliche Wert des Übersetzungsverhältnisses r immer eine Restabweichung zum angeforderten Übersetzungsverhältnis $r_a$ aufweist, die jedoch verglichen mit dem Stand der Technik gering ist.

Figur 4c zeigt einen Verlauf von Verdrängungsvolumensollwerten $v_{Ps}$, $v_{Ms}$ entsprechenden Schwenkwinkelsollwerten $\alpha_{Ps}$ und $\alpha_{Ms}$ der Hydropumpe 16 und des Hydromotors 18. Wie bereits bei den Figuren 3a bis 3c erläutert, sind die Schwenkwinkelsollwerte $\alpha_{Ps}$ und $\alpha_{Ms}$ aufgrund der Bauweise der Hydromaschinen 16, 18 proportional zu den Verdrängungsvolumensollwerten $v_{Ps}$, $v_{Ms}$. Figur 4c zeigt eindrücklich, wie ein Ausführungsbeispiel eines erfindungsgemäßen Steuerungsverfahrens im Übergangsbereich von einem Fahrbereichsabschnitt mit rein variabler Ansteuerung der Hydropumpe 16 zu einem Fahrbereichsabschnitt mit rein variabler Ansteuerung des Hydromotors 18 und umgekehrt zu einem sanfteren und kontinuierlicheren Verlauf des Übersetzungsverhältnisses beiträgt.

Ausgehend vom Zeitpunkt t = 0 weist der Schenkwinkelsollwert $\alpha_{Ms}$ des Hydromotors 18 einen Wert von 100 % auf, wohingegen der Schenkwinkelsollwert $\alpha_{Ps}$ der Hydropumpe 16 kontinuierlich ansteigt. Die Steuerung des Übersetzungsverhältnisses basiert in diesem Fahrbereichsabschnitt also zunächst allein auf der variablen Ansteuerung der Hydropumpe 16. In einem Totzeitintervall $t_M$ des Hydromotors 18, das einer Antwortzeit des Hydromotors 18 auf ein Sollwertsignal entspricht, werden nun beide Hydromaschinen 16, 18 zeitgleich von der Steuereinrichtung 34 mit variablem Verdrängungsvolumensollwert $v_{Ps}$, $v_{Ms}$ angesteuert. Der Hydromotor 18 wird dabei über die Steuereinrichtung 34 gemäß Figur 1 um die Totzeit $t_M$ verfrüht angesteuert. Das bewirkt idealerweise, dass bei Ablauf der Totzeit $t_M$ der als geschlossene Kurve dargestellte Istwert des Schenkwinkels der Hydropumpe 16 $\alpha_P$ seinen Maximalwert von 100 % erreicht und zeitgleich dazu der Istwert des Schwenkwinkels des Hydromotors 18 $\alpha_M$ (gepunktet) seinen Maximalwert von 100 % verlässt und verringert wird.

Betrachtet man zu diesem Zeitpunkt den Verlauf des tatsächlichen Übersetzungsverhältnisses r in Figur 4d, so ist an dieser Stelle kein Plateau im Verlauf des Übersetzungsverhältnisses r zu erkennen. Die die Totzeit $t_M$ berücksichtigende Steuerung trägt somit zur Vergleichmäßigung und Präzision des Steuerverhaltens des Übersetzungsverhältnisses r bei. Ein ähnliches Verhalten zeigt sich beim Übergang der Steuerung im Bereich des Totzeitintervalls $t_P$, zu dem in analoger Weise von der rein variablen Ansteuerung des Hydromotors 18 mit seinem Sollwert $\alpha_{Ms}$ zur variablen Ansteuerung der Hydropumpe 16 mit ihrem Sollwert $\alpha_{Ps}$ übergegangen wird. Die Totzeit $t_P$ entspricht dabei der Antwortzeit der Hydropumpe 16 auf ein Sollwertsignal. Die Totzeiten $t_M$, $t_P$ können unterschiedliche Werte aufweisen und sind maschinenspezifische Parameter.

Figur 4b zeigt den Kurvenverlauf des maximal zulässigen Arbeitsdruckes $p_{max}$ und des tatsächlichen Arbeitsdruckes $p_{A,B}$. Im Diagramm sind die Strecken a und b gekennzeichnet. Figur 4b zeigt im Prinzip beide Operanden der mit Bezug zu den Figuren 3a bis 3c beschriebenen Gleichung 1.1. Der Wert $p_{max}$ entspricht dabei der Summe der Strecken a + b und der Wert des Arbeitsdrucks $p_{A,B}$ entspricht der Strecke b.

Figur 4a zeigt den Verlauf der Korrekturfaktoren $\eta_{p_{max}}$ und $\eta_{p_{A,B}}$. Dabei ist der Einfluss der Sumpftemperatur $T_p$ vernachlässigt, wobei sie als konstant angenommen ist. Dies resultiert in einem $K_T$ von 1.

Bezugszeichenliste

| | |
|---|---|
| 1 | Fahrantrieb |
| 2 | Getriebe |
| 4 | Eingangswelle |
| 6 | Antriebsmaschine |
| 8 | Eingangswelle hydraulischer Leistungszweig |
| 10 | Eingangswelle mechanischer Leistungszweig |
| 11 | Eingangswelle Summierabschnitt |
| 12 | hydraulischer Leistungszweig |
| 14 | mechanischer Leistungszweig |
| 16 | erste Hydromaschine |
| 17 | Verstelleinrichtung |
| 18 | zweite Hydromaschine |
| 19 | Verstelleinrichtung |
| 20 | Ausgangswelle |
| 21 | Eingangswelle |

| 22 | Summierabschnitt |
|---|---|
| 23 | Steg |
| 24 | Abtriebswelle |
| 25 | Hohlrad |
| 26 | Achseinheit |
| 28 | erstes Motorzahnrad |
| 30 | Zwischenzahnrad |
| 32 | Sonnenrad |
| 34 | Steuereinrichtung |
| 35 | Fahrpedal |
| 36 | Zahnrad |
| 42, 44 | erste Arbeitsleitung, zweite Arbeitsleitung |
| 48 | Verfahren |
| 52 | Speichereinheit |
| 54 | Prozessoreinheit |
| C1, C2 | erste Kupplung, zweite Kupplung |

**Patentansprüche**

1. Leistungsverzweigtes Getriebe für einen Fahrantrieb (1), mit einem Getriebeeingang (4) und einem Getriebeausgang (24), über deren Drehzahlen ein tatsächliches Übersetzungsverhältnis (r) des Getriebes (2) definierbar ist, und mit einem hydraulischen Leistungszweig (12) mit einer mit dem Getriebeeingang (4) koppelbaren ersten Hydromaschine (16) und einer mit dieser über eine erste Arbeitsleitung (42) und eine zweite Arbeitsleitung (44) fluidisch verbindbaren, und mit dem Getriebeausgang (24) koppelbaren, zweiten Hydromaschine (18), wobei beide Hydromaschinen (16, 18) jeweils eine Verstelleinrichtung (17, 19) zur Verstellung ihres Verdrängungsvolumens ($v_P$, $v_M$) aufweisen, und mit einem weiteren Leistungszweig (14), der mit dem Getriebeeingang (4) und dem Getriebeausgang (24) koppelbar ist, und mit einer Steuereinrichtung (34) zur Steuerung des Übersetzungsverhältnisses (r), die derart ausgestaltet ist, dass über sie die jeweilige Verstelleinrichtung (17, 19) mit einem Verdrängungsvolumensollwert ($v_{Ps}$, $v_{Ms}$) ansteuerbar ist, der zumindest in einem Fahrbereich ($I_a$, $I_b$, II, III) des Getriebes (2), in dem das Verdrängungsvolumen ($v_P$, $v_M$) einer der Hydromaschinen (16, 18) ein Maximum erreicht oder ausgehend vom Maximum verringert wird, gegenüber einem an einem aktuellen Bedarf orientierten Verdrängungsvolumensollwert verändert ist, **dadurch gekennzeichnet, dass** Druckmittel der Hochdruck aufweisenden Arbeitsleitung als Steuerdruckmittelquelle der Verstelleinrichtung der zweiten Hydromaschine vorgesehen ist und die Steuereinrichtung (34) derart ausgestaltet ist, dass über sie der Verdrängungsvolumensollwert ($v_{Ms}$) der zweiten Hydromaschine (18) zumindest in einem ersten Intervall des Übersetzungsverhältnisses (r) derart verändert ist, dass er auf einen Bruchteil eines maximalen Verdrängungsvolumensollwertes begrenzt ist.

2. Getriebe nach Patentanspruch 1, wobei die Steuereinrichtung (34) derart ausgestaltet ist, dass über sie der eine ($v_{Ps}$, $v_{Ms}$) oder beide Verdrängungsvolumensollwerte ($v_{Ps}$, $v_{Ms}$) zumindest in Abhängigkeit des Fahrbereichs ($I_a$, $I_b$, II, III) und / oder des Übersetzungsverhältnisses (r) und / oder einer Leistungsflussrichtung ($P_{+/-}$) des Getriebes (2) und / oder eines Arbeitsdrucks ($p_{A,B}$) einer der Arbeitsleitungen (42, 44) und / oder eines Grenzarbeitsdrucks ($p_{max}$) der Arbeitsleitungen (42, 44) und / oder einer Druckmitteltemperatur ($T_p$) und / oder der Getriebeeingangsdrehzahl ($n_E$) verändert ist oder sind.

3. Getriebe nach einem der vorhergehenden Patentansprüche, wobei die Steuereinrichtung (34) derart ausgestaltet ist, dass über sie Verstelleinrichtungen (17, 19) beider Hydromaschinen (16, 18) etwa zeitgleich ansteuerbar sind.

4. Getriebe nach einem der vorhergehenden Patentansprüche, wobei die Steuereinrichtung (34) derart ausgestaltet ist, dass in einem zweiten Intervall des Übersetzungsverhältnisses (r) die Verdrängungsvolumensollwerte ($v_{Ps}$, $v_{Ms}$) der Hydromaschinen (16, 18) von null verschiedene Gradienten mit unterschiedlichen Vorzeichen aufweisen können.

5. Getriebe nach einem der vorhergehenden Patentansprüche, wobei die Steuereinrichtung (34) derart ausgestaltet ist, dass über sie der eine ($v_{Ps}$, $v_{Ms}$) oder beide Verdrängungsvolumensollwerte ($v_{Ps}$, $v_{Ms}$) zumindest in Abhängigkeit einer Totzeit ($t_P$, $t_M$) oder Antwortzeit einer der Hydromaschinen (16, 18) verändert ist.

6. Verfahren zur Steuerung des Übersetzungsverhältnisses (r) eines leistungsverzweigten Getriebes (2), das gemäß einem der vorhergehenden Patentansprüche ausgestaltet ist, mit den Schritten

- Ermittlung des gegenüber dem am Bedarf orientierten Verdrängungsvolumensollwert veränderten Verdrängungsvolumensollwertes ($v_{Ps}$, $v_{Ms}$) für die wenigstens eine Hydromaschine (16, 18), und
- Ansteuerung der Verstelleinrichtung (17, 19) der wenigstens einen Hydromaschine (16, 18) mit dem derart veränderten Verdrängungsvolumensollwert ($v_{Ps}$, $v_{Ms}$) wobei der Schritt
- Ermittlung des gegenüber dem am Bedarf orientierten Verdrängungsvolumensollwert veränderten Verdrängungsvolumensollwertes ($v_{Ms}$) für die zweite Hydromaschine (18)

zumindest in einem ersten Intervall des Übersetzungsverhältnisses (r) zumindest über einen Schritt

- Begrenzung des Verdrängungsvolumensollwertes für die zweite Hydromaschine auf einen Bruchteil eines maximalen Verdrängungsvolumensollwertes

erfolgt.

**7.** Verfahren nach Patentanspruch 6, wobei der Schritt

- Ermittlung des gegenüber dem am Bedarf orientierten Verdrängungsvolumensollwert veränderten Verdrängungsvolumensollwertes ($v_{Ps}$, $v_{Ms}$) für die wenigstens eine Hydromaschine (16, 18)

zumindest in Abhängigkeit des Fahrbereichs ($I_a$, $I_b$, II, III) und / oder einer Leistungsflussrichtung ($P_{+/-}$) des Getriebes (2) und / oder des Übersetzungsverhältnisses (r) und / oder eines Arbeitsdrucks ($p_{A,B}$) einer der Arbeitsleitungen (42, 44) und / oder eines Grenzarbeitsdrucks ($p_{max}$) einer der Arbeitsleitungen (42, 44) und / oder einer Druckmitteltemperatur ($T_p$) und / oder einer Getriebeeingangsdrehzahl ($n_E$) erfolgt.

**8.** Verfahren nach Patentanspruch 6 oder 7, wobei der Schritt

- Ansteuerung der Verstelleinrichtung (17, 19) der wenigstens einen Hydromaschine (16, 18) mit dem derart veränderten Verdrängungsvolumensollwert ($v_{Ps}$, $v_{Ms}$) etwa zeitgleich mit einem Schritt
- Ansteuerung der Verstelleinrichtung (19, 17) der jeweils anderen Hydromaschine (18, 16) mit einem Verdrängungsvolumensollwert erfolgt.

**9.** Verfahren nach einem der Patentansprüche 6 bis 8, wobei der Schritt

- Ermittlung des gegenüber dem am Bedarf orientierten Verdrängungsvolumensollwert veränderten Verdrängungsvolumensollwertes ($v_{Ps}$, $v_{Ms}$) für die wenigstens eine Hydromaschine (16, 18)

zumindest in Abhängigkeit einer Totzeit ($t_P$, $t_M$) oder Antwortzeit einer der Hydromaschinen (16, 18) erfolgt.

**Claims**

**1.** Power split transmission for a travel drive (1), having a transmission input (4) and a transmission output (24), the rotational speeds of which serve to define an actual transmission ratio (r) of the transmission (2), and having a hydraulic power branch (12) having a first hydraulic machine (16), which can be coupled to the transmission input (4), and a second hydraulic machine (18), which can be hydraulically connected to the former by way of a first working line (42) and a second working line (44) and coupled to the transmission output (24), wherein both hydraulic machines (16, 18) each comprise an adjusting device (17, 19) for adjusting its displacement ($v_P$, $v_M$), and having a further power branch (14), which can be coupled to the transmission input (4) and the transmission output (24), and having a control device (34) for controlling the transmission ratio (r), which is designed in such a way that it serves to actuate the respective adjusting device (17, 19) at a displacement setting ($v_{Ps}$, $v_{Ms}$), which is adjusted in relation to a displacement setting oriented to a current demand, at least in a drive mode ($I_a$, $I_b$, II, III) of the transmission (2) in which the displacement ($v_P$, $v_M$) of one of the hydraulic machines (16, 18) reaches a maximum or is reduced from the maximum, **characterized in that** fluid in the high-pressure working line is intended as control fluid source of the adjusting device of the second hydraulic machine.

and the control device (34) is designed in such a way that it serves to adjust the displacement setting ($v_{Ms}$) of the second hydraulic machine (18) at least in a first interval of the transmission ratio (r), in such a way that it is limited to a fraction of a maximum displacement setting.

2. Transmission according to Claim 1, wherein the control device (34) is designed in such a way that it serves to adjust the one ($v_{Ps}$, $v_{Ms}$) or both of the displacement settings ($v_{Ps}$, $v_{Ms}$) at least as a function of the drive mode ($I_a$, $I_b$, II, III) and/or of the transmission ratio (r) and/or of a power flow direction ($P_{+/-}$) of the transmission (2) and /or of a working pressure ($p_{A,B}$) of one of the working lines (42, 44) and/or of a working pressure limit ($p_{max}$) of the working lines (42, 44) and/or of a fluid temperature ($T_p$) and/or of the transmission input speed ($n_E$).

3. Transmission according to either of the preceding claims, wherein the control device (34) is designed in such a way that it serves to actuate adjusting devices (17, 19) of both hydraulic machines (16, 18) more or less simultaneously.

4. Transmission according to one of the preceding claims, wherein the control device (34) is designed in such a way that the displacement settings ($v_{Ps}$, $v_{Ms}$) of the hydraulic machines (16, 18) can have gradients other than zero with different signs in a second interval of the transmission ratio (r).

5. Transmission according to one of the preceding claims, wherein the control device (34) is designed in such a way that it serves to adjust the one ($v_{Ps}$, $v_{Ms}$) or both displacement settings ($v_{Ps}$, $v_{Ms}$) at least as a function of a dead time ($t_P$, $t_M$) or response time of one of the hydraulic machines (16, 18).

6. Method for controlling the transmission ratio (r) of a power split transmission (2), which is designed according to one of the preceding claims, comprising the steps:

   - determination of the displacement setting ($v_{Ps}$, $v_{Ms}$), adjusted in relation to the displacement setting oriented to the demand, for at least the one hydraulic machine (16, 18), and
   - actuation of the adjusting device (17, 19) of at least the one hydraulic machine (16, 18) at the displacement setting ($v_{Ps}$, $v_{Ms}$) adjusted in this way, wherein the step
   - determination of the displacement setting ($v_{Ms}$), adjusted in relation to the displacement setting oriented to the demand, for the second hydraulic machine (18)

   is performed at least in a first interval of the transmission ratio (r) at least via a step

   - limiting of the displacement setting for the second hydraulic machine to a fraction of a maximum displacement setting.

7. Method according to Claim 6, wherein the step

   - determination of the displacement setting ($v_{Ps}$, $v_{Ms}$), adjusted in relation to the displacement setting oriented to the demand, for at least the one hydraulic machine (16, 18)

   is performed at least as a function of the drive mode ($I_a$, $I_b$, II, III) and/or of a power flow direction ($P_{+/-}$) of the transmission (2) and/or of the transmission ratio (r) and/or of a working pressure ($p_{A,B}$) of one of the working lines (42, 44) and/or of a working pressure limit ($p_{max}$) of one of the working lines (42, 44) and/or of a fluid temperature ($T_p$) and/or of the transmission input speed ($n_E$).

8. Method according to Claim 6 or 7, wherein the step

   - actuation of the adjusting device (17, 19) of at least the one hydraulic machine (16, 18) at the displacement setting ($v_{Ps}$, $v_{Ms}$) determined in this way

   is performed more or less simultaneously with a step

   - actuation of the adjusting device (19, 17) of the other hydraulic machine (18, 16) at a displacement setting.

9. Method according to one of Claims 6 to 8, wherein the step

   - determination of the displacement setting ($v_{Ps}$, $v_{Ms}$), adjusted in relation to the displacement setting oriented to the demand, for at least one hydraulic machine (16, 18)

   is performed at least as a function of a dead time ($t_P$, $t_M$) or response time of one of the hydraulic machines (16, 18).

**Revendications**

1. Transmission à répartition de puissance pour un entraînement de conduite (1), comprenant une entrée de transmission (4) et une sortie de transmission (24) dont les vitesses de rotation permettent de définir un rapport de transmission effectif (r) de la transmission (2), et comprenant une branche de puissance hydraulique (12) avec une première machine hydraulique (16) pouvant être accouplée à l'entrée de transmission (4) et une deuxième machine hydraulique (18) pouvant être raccordée fluidiquement à celle-ci par le biais d'une première conduite de travail (42) et d'une deuxième conduite de travail (44) et pouvant être accouplée à la sortie de transmission (24), les deux machines hydrauliques (16, 18) présentant chacune un dispositif de réglage (17, 19) pour régler leurs volumes de refoulement ($V_P$, $V_M$), et comprenant une branche de puissance supplémentaire (14) qui peut être accouplée à l'entrée de transmission (4) et à la sortie de transmission (24) et comprenant un dispositif de commande (34) pour commander le rapport de transmission (r), lequel est configuré de telle sorte qu'il permette de commander le dispositif de réglage respectif (17, 19) avec une valeur de consigne de volume de refoulement ($V_{Ps}$, $V_{Ms}$) qui, au moins dans une plage de conduite ($I_a$, $I_b$, II, III) de la transmission (2), dans laquelle le volume de refoulement ($V_P$, $V_M$) de l'une des machines hydrauliques (16, 18) atteint un maximum ou est réduit à partir du maximum, est modifiée par rapport à une valeur de consigne de volume de refoulement orientée vers un besoin actuel, **caractérisée en ce qu'**un fluide sous pression de la conduite de travail présentant une haute pression est prévu en tant que source de fluide sous pression de commande du dispositif de réglage de la deuxième machine hydraulique et le dispositif de commande (34) est configuré de telle sorte qu'il permette de modifier la valeur de consigne du volume de refoulement ($V_{Ms}$) de la deuxième machine hydraulique (18) au moins dans un premier intervalle du rapport de transmission (r) de telle sorte qu'elle soit limitée à une fraction d'une valeur de consigne de volume de refoulement maximale.

2. Transmission selon la revendication 1, dans laquelle le dispositif de commande (34) est configuré de telle sorte qu'il permette de modifier l'une ($V_{Ps}$, $V_{Ms}$) ou les deux valeurs de consigne du volume de refoulement ($V_{Ps}$, $V_{Ms}$) au moins en fonction de la plage de conduite ($I_a$, $I_b$, II, III) et/ou du rapport de transmission (r) et/ou d'un sens du flux de puissance ($P\pm$) de la transmission (2) et/ou d'une pression de travail ($p_{A,B}$) de l'une des conduites de travail (42, 44) et/ou d'une pression de travail limite ($p_{max}$) des conduites de travail (42, 44) et/ou d'une température du fluide sous pression ($T_p$) et/ou de la vitesse de rotation d'entrée de la transmission ($n_E$).

3. Transmission selon l'une quelconque des revendications précédentes, dans laquelle le dispositif de commande (34) est configuré de telle sorte qu'il permette de commander des dispositifs de réglage (17, 19) des deux machines hydrauliques (16, 18) approximativement simultanément.

4. Transmission selon l'une quelconque des revendications précédentes, dans laquelle le dispositif de commande (34) est configuré de telle sorte que dans un deuxième intervalle du rapport de transmission (r), les valeurs de consigne du volume de refoulement ($V_{Ps}$, $V_{Ms}$) des machines hydrauliques (16, 18) puissent présenter des gradients différents de zéro avec des signes différents.

5. Transmission selon l'une quelconque des revendications précédentes, dans laquelle le dispositif de commande (34) est configuré de telle sorte qu'il permette de modifier l'une ($V_{Ps}$, $V_{Ms}$) ou les deux valeurs de consigne du volume de refoulement ($V_{Ps}$, $V_{Ms}$) au moins en fonction d'un temps mort ($t_P$, $t_M$) ou d'un temps de réponse de l'une des machines hydrauliques (16, 18).

6. Procédé de commande du rapport de transmission (r) d'une transmission à répartition de puissance (2) qui est configurée selon l'une quelconque des revendications précédentes, comprenant les étapes suivantes :

   - détermination de la valeur de consigne du volume de refoulement ($V_{Ps}$, $V_{Ms}$) modifiée par rapport à la valeur de consigne du volume de refoulement orientée vers le besoin pour l'au moins une machine hydraulique (16, 18), et
   - commande du dispositif de réglage (17, 19) de l'au moins une machine hydraulique (16, 18) avec la valeur de consigne du volume de refoulement ($V_{Ps}$, $V_{Ms}$) modifiée de la sorte,

   l'étape de

   - détermination de la valeur de consigne du volume de refoulement ($V_{MS}$) modifiée par rapport à la valeur de consigne du volume de refoulement orientée vers le besoin pour la deuxième machine hydraulique (18) s'effectuant au moins dans un premier intervalle du rapport de transmission (r) au moins par le biais d'une étape
   - de limitation de la valeur de consigne du volume de refoulement pour la deuxième machine hydraulique à une fraction d'une valeur de consigne de volume de refoulement maximale.

7. Procédé selon la revendication 6, dans lequel l'étape

   - de détermination de la valeur de consigne du volume de refoulement ($V_{Ps}$, $V_{Ms}$) modifiée par rapport à la valeur de consigne du volume de refoulement orientée vers le besoin pour l'au moins une machine hydraulique (16, 18)

   s'effectue au moins en fonction de la plage de conduite ($I_a$, $I_b$, II, III) et/ou d'un sens du flux de puissance ($P\pm$) de la transmission (2) et/ou du rapport de transmission (r) et/ou d'une pression de travail ($p_{A,B}$) de l'une des conduites de travail (42, 44) et/ou d'une pression de travail limite ($p_{max}$) de l'une des conduites de travail (42, 44) et/ou d'une température du fluide sous pression ($T_p$) et/ou de la vitesse de rotation d'entrée de la transmission ($n_E$).

8. Procédé selon la revendication 6 ou 7, dans lequel l'étape de

   - commande du dispositif de réglage (17, 19) de l'au moins une machine hydraulique (16, 18) avec la valeur de consigne du volume de refoulement ($V_{Ps}$, $V_{Ms}$) modifiée de la sorte s'effectue approximativement simultanément avec une étape de
   - commande du dispositif de réglage (19, 17) de l'autre machine hydraulique respective (18, 16) avec une valeur de consigne de volume de refoulement.

9. Procédé selon l'une quelconque des revendications 6 à 8, dans lequel l'étape

   - de détermination de la valeur de consigne du volume de refoulement ($V_{Ps}$, $V_{Ms}$) modifiée par rapport à la valeur de consigne du volume de refoulement orientée vers le besoin pour l'au moins une machine hydraulique (16, 18)

   s'effectue au moins en fonction d'un temps mort ($t_P$, $t_M$) ou d'un temps de réponse de l'une des machines hydrauliques (16, 18).

**Fig. 1**

EP 2 789 882 B1

Fig. 2a

Fig. 2b

Fig. 3a

Fig. 3b

Fig. 3c

**Fig. 4d**

**Fig. 4c**

**Fig. 4b**

**Fig. 4a**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007037107 A1
- DE 102007037664 A1
- DE 10149883 A1
- DE 102006017792 A1